**Europäisches Patentamt**

**European Patent Office**

**Office européen des brevets**

(19)

(11) Numéro de publication : **0 365 420 B1**

# FASCICULE DE BREVET EUROPEEN

(12)

(45) Date de publication du fascicule du brevet :
**15.04.92 Bulletin 92/16**

(51) Int. Cl.⁵ : **F03C 1/04,** F04B 1/06,
F04B 21/00

(21) Numéro de dépôt : **89402861.2**

(22) Date de dépôt : **17.10.89**

(54) **Mécanisme à fluide sous pression à deux cylindrées et circuit fermé en faisant application.**

(30) Priorité : **19.10.88 FR 8813762**

(43) Date de publication de la demande :
**25.04.90 Bulletin 90/17**

(45) Mention de la délivrance du brevet :
**15.04.92 Bulletin 92/16**

(84) Etats contractants désignés :
**DE GB**

(56) Documents cités :
**FR-A- 2 292 877**
**FR-A- 2 481 755**
**GB-A- 2 168 436**

(73) Titulaire : **POCLAIN HYDRAULICS**
**Boîte Postale no 12**
**F-60410 Verberie (FR)**

(72) Inventeur : **Bigo, Louis Bernard**
**33bis rue Saint-Germain**
**F-60200 Compiegne (FR)**
Inventeur : **Allart, Bernard René**
**3, Avenue Beauséjour**
**F-60800 Crepy-en-Valois (FR)**

(74) Mandataire : **Hoisnard, Jean-Claude et al**
**Cabinet Beau de Loménie 55, rue**
**d'Amsterdam**
**F-75008 Paris (FR)**

**Description**

FR-A-2 481 755 décrit un moteur hydraulique susceptible de posséder deux cylindrées actives de valeurs différentes.

Un tel moteur peut avoir de nombreuses applications et être notamment alimenté en circuit fermé. De tels circuits fermés doivent généralement être dotés de dispositifs de réfrigération du fluide hydraulique utilisé : l'invention a pour objet la définition d'une disposition simple permettant d'obtenir la réfrigération dudit fluide hydraulique.

Il convient de noter que, si l'origine de l'invention se trouve dans l'application du moteur précité à son alimentation en circuit fermé, cette invention peut avoir d'autres applications et est donc plus généralement relative au dispositif complémentaire du moteur connu qui permet le prélèvement d'une partie du fluide d'alimentation du moteur pour toute utilisation ultérieure souhaitée du fluide prélevé. Ce fluide prélevé peut, dans le cas d'une alimentation en circuit fermé, être réfrigéré, puis remélangé au reste du fluide, mais peut aussi, dans le cas d'un circuit ouvert, être au contraire réchauffé afin de mettre plus rapidement à la bonne température de fonctionnement les divers constituants d'un circuit, y compris le moteur hydraulique lui-même, ou encore servir à irriguer des éléments, momentanément non actifs, de moteurs hydrauliques.

L'invention est donc d'abord relative à un mécanisme à fluide sous pression, moteur ou pompe, comprenant deux raccords principaux susceptibles d'être reliés, l'un à une enceinte contenant un fluide haute pression, l'autre à une enceinte contenant un fluide basse pression, et inversement ; une came à plusieurs ondes successives, qui sont réparties en un premier et en un deuxième groupe d'ondes distincts ; une pluralité de cylindres, qui sont ménagés dans un bloc-cylindres monté à rotation par rapport à ladite came ; une pluralité de pistons, qui sont montés coulissants dans lesdits cylindres, au moins un piston par cylindre, et qui prennent appui sur ladite came ; un distributeur interne de fluide comportant autant de paires de premiers et de deuxièmes conduits de distribution que d'ondes que comporte la came, lesdites paires de conduits de distribution étant réparties en deux groupes distincts de paires d'un premier et d'un deuxième conduit de distribution, chaque paire correspondant à l'une desdites ondes de la came ; un organe de sélection de la cylindrée, qui est susceptible d'être placé en deux positions distinctes, une première position, dans laquelle les premiers conduits de distribution des deux dits groupes de conduits de distribution sont raccordés au premier raccord principal et dans laquelle les deuxièmes conduits de distribution des deux dits groupes sont raccordés au deuxième raccord principal, et, la deuxième position, dans laquelle les premiers conduits de distribution du premier groupe de conduits de distribution sont raccordés au premier raccord principal, les deuxièmes conduits de distribution du premier groupe de conduits de distribution sont raccordés au deuxième raccord principal, et les premier et deuxième conduits de distribution du deuxième groupe de conduits de distribution sont raccordés entre eux ; un clapet navette, qui est monté mobile dans un logement ménagé dans ledit organe de sélection de la cylindrée, qui comporte deux faces opposées soumises en permanence, lorsque ledit organe de sélection de la cylindrée est placé dans ladite deuxième position, l'une à l'effet de la pression du fluide contenu dans le premier raccord principal, l'autre à l'effet de la pression du fluide contenu dans le deuxième raccord principal, ces effets étant antagonistes et leur résultante étant susceptible de placer le clapet navette dans l'une ou l'autre de deux positions extrêmes à l'intérieur dudit logement, cependant que, lorsque l'organe de sélection de la cylindrée est placé dans sa deuxième position, ledit clapet navette établit la communication, au moyen d'au moins un conduit interne audit clapet navette et d'au moins un conduit interne à l'organe de sélection de la cylindrée qui communique alors, d'une part, avec le conduit interne du clapet navette, d'autre part, avec celui des premier et deuxième raccords principaux susceptible de contenir le fluide basse pression, (ledit clapet navette établit la communication) entre lesdits premiers et deuxièmes conduits de distribution dudit deuxième groupe de conduits de distribution et ledit raccord principal susceptible de contenir le fluide basse pression.

Selon l'invention, un conduit de prélèvement est ménagé au moins partiellement dans ledit organe de sélection de la cylindrée et communique avec ledit conduit interne du clapet navette, qu'il relie à une évacuation de fluide par l'intermédiaire d'une restriction calibrée.

Les avantageuses dispositions suivantes sont, en outre, de préférence adoptées:

– le clapet navette comporte deux conduits internes, qui sont reliés, l'un, dans la première position du clapet navette, l'autre, dans la deuxième position du clapet navette, audit raccord principal susceptible de contenir le fluide basse pression, cependant que le conduit de prélèvement comporte deux branches qui communiquent, l'une, dans la première position du clapet navette, avec l'un des deux dits conduits internes du clapet navette, l'autre, dans la deuxième position du clapet navette, avec l'autre des deux dits conduits internes du clapet navette,

– le conduit de prélèvement débouche dans un carter que comporte le moteur.

L'invention a également pour objet un circuit fermé d'alimentation en fluide sous pression d'un mécanisme à au moins deux cylindrées tel que défini ci-avant et qui comporte un réservoir de fluide, auquel le carter dudit mécanisme est relié par un conduit d'évacuation, ainsi qu'une pompe de gavage, qui comporte un conduit d'aspiration et un conduit de refoulement et qui est reliée audit réservoir par son conduit d'aspiration, un échangeur de chaleur, dont la fonction est de réfrigérer le fluide aspiré par ladite pompe de gavage, étant placé sur l'un desdits conduits d'aspiration et de refoulement de la pompe de gavage.

L'avantage principal du mécanisme conforme à l'invention réside dans sa simplicité, la modification réalisée par rapport au mécanisme antérieurement connu étant matériellement petite, bien que son efficacité soit grande.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

– la figure 1 est une coupe axiale suivant I-I de la figure 2 d'un mécanisme conforme à l'invention ;

– la figure 2 est une coupe transversale suivant II-II de la figure 1 ;

– les figures 3, 4, 5 et 6 sont des coupes suivant III-III, IV-IV, V-V et VI-VI, respectivement, de la figure 1 ;

– les figures 7, 8, 9 et 10 représentent un circuit d'alimentation du mécanisme des figures 1 et 2, correspondant à quatre configurations distinctes de fonctionnement, respectivement et ;

– la figure 11 représente un autre circuit d'alimentation, également conforme à l'invention, du même mécanisme des figures 1 et 2.

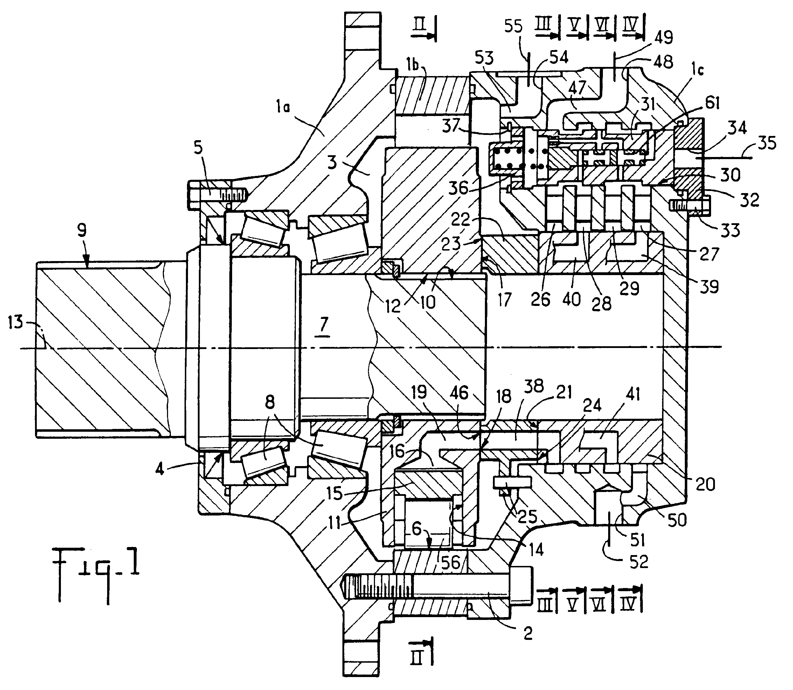

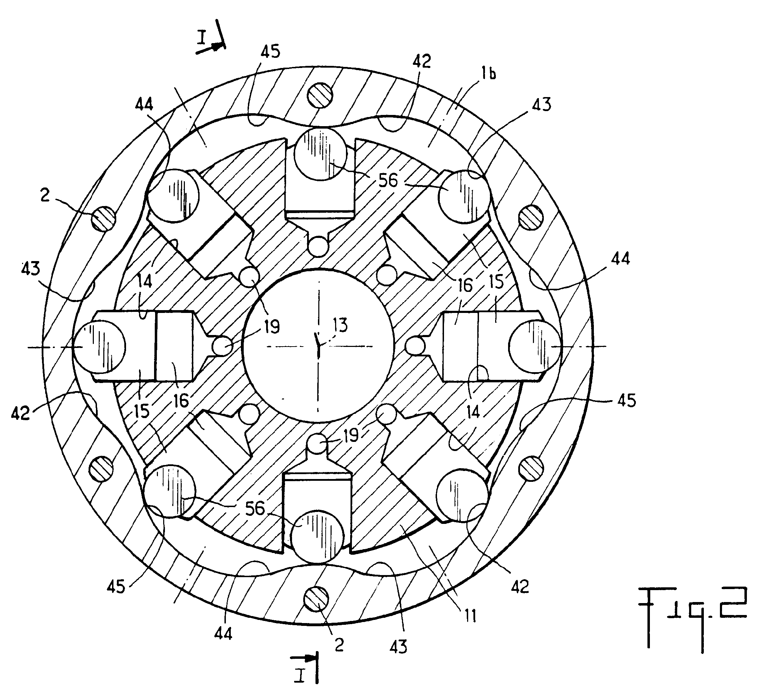

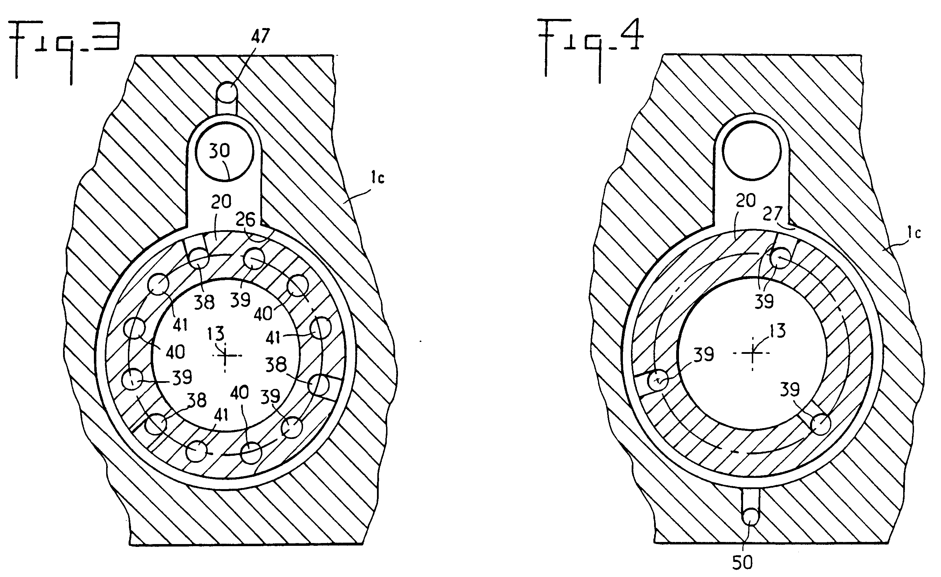

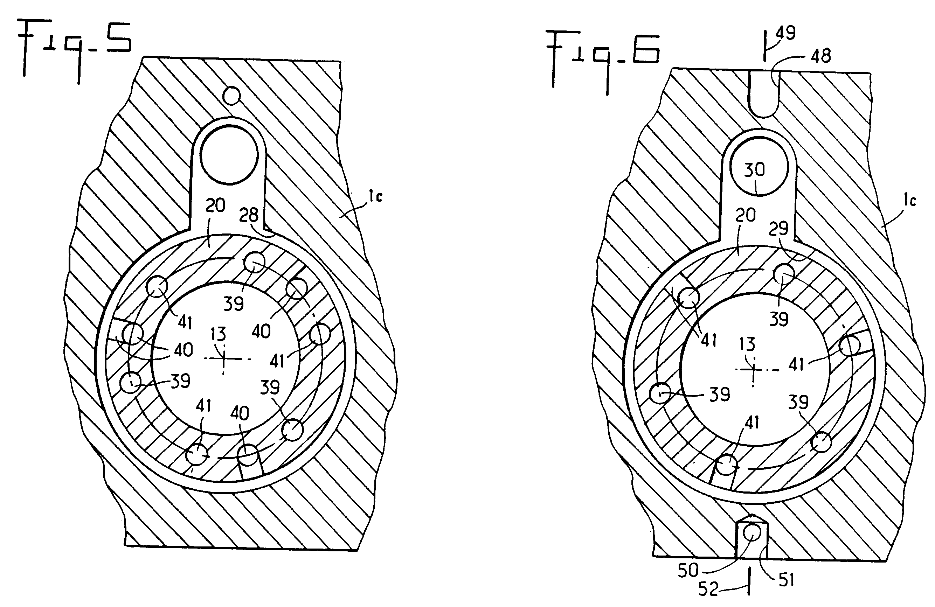

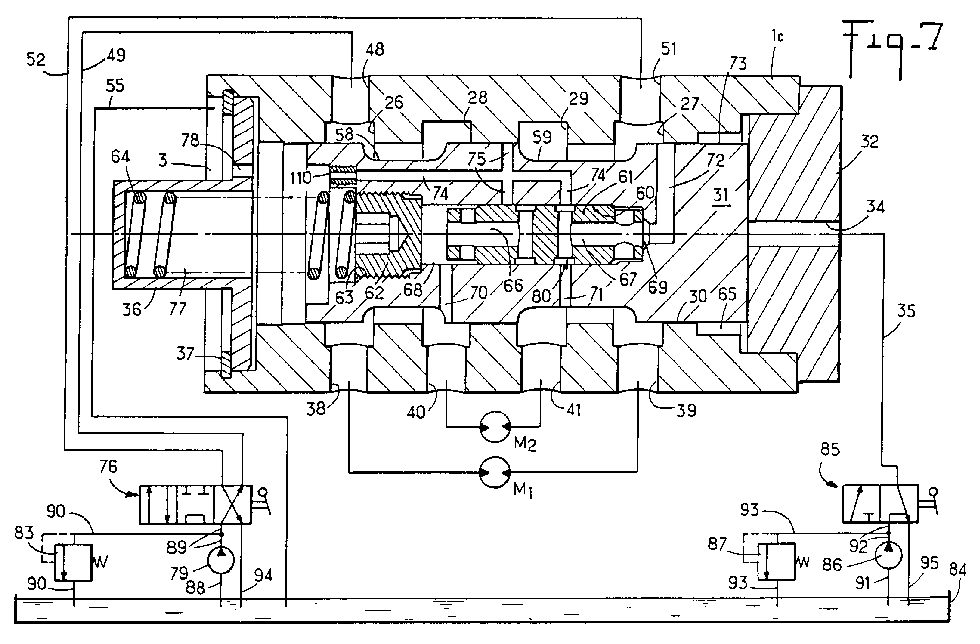

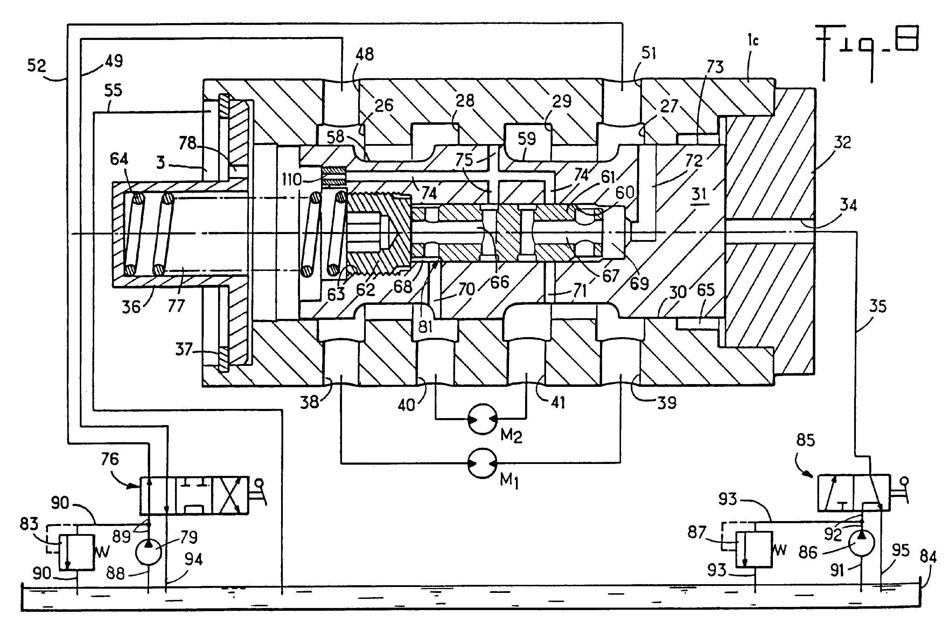

Le moteur représenté sur les figures 1 à 6 est constitué par :

– un carter comprenant trois parties 1a, 1b et 1c assemblées par des boulons 2, ce carter délimitant une enceinte 3 fermée par une plaque d'obturation 4 fixée sur la partie 1a par des vis 5 ;

– la face interne 6 de la partie intermédiaire 1b du carter forme une came ondulée ;

– un arbre de sortie (arbre moteur) 7, qui est monté à rotation par rapport au carter, autour d'un axe géométrique 13, au moyen de paliers de rotation 8, et comprenant des cannelures externes 9, qui en permettent l'accouplement à un élément devant être entraîné, et des cannelures internes 10 ;

– un bloc-cylindres 11, qui comporte des cannelures 12 coopérant avec les cannelures internes 10 de l'arbre de sortie 7 pour solidariser en rotation ces deux pièces ;

– une pluralité de cylindres 14, disposés radialement dans le bloc-cylindres 11 et angulairement espacés de manière régulière autour de l'axe 13 ;

– des pistons 15 montés coulissants dans lesdits cylindres, un piston par cylindre, définissant avec le cylindre 14 correspondant une chambre de travail 16 et en appui sur la came 6 par l'intermédiaire d'un rouleau cylindrique 56 ;

– une face plane 17 du bloc-cylindres, perpendiculaire à l'axe 13, dans laquelle débouchent, par des orifices 18, des conduits 19 reliant, chaque conduit 19, la chambre de travail 16 d'un cylindre à ladite face plane 17 ;

– un fourreau intérieur 20, qui est solidaire de la partie 1c du carter et qui comporte une face plane 21 perpendiculaire à l'axe 13 ;

– un distributeur interne de fluide 22, conformé en une sorte de disque épais délimité par deux faces planes 23 et 24 perpendiculaires à l'axe 13 et en contact avec les faces planes 17 du bloc-cylindres 11 et 21 du fourreau 20, respectivement, ce distributeur interne de fluide 22 étant, en outre, immobilisé en rotation par rapport à la partie 1c du carter au moyen d'un ensemble 25 d'ergots et d'encoches ;

– en regard du fourreau 20, quatre gorges circulaires 26, 27, 28 et 29 sont ménagées dans la partie 1c du carter et débouchent à la périphérie externe du fourreau disposée en regard ;

– un alésage 30 est ménagé dans la partie 1c du carter et contient un tiroir 31 de sélection de la cylindrée, qui y est monté coulissant, cet alésage 30 étant fermé extérieurement par un bouchon d'obturation 32 fixé sur la partie 1c du carter par des vis 33 et étant traversé par le raccord 34 d'un conduit extérieur 35 et étant fermé intérieurement par un chapeau 36 maintenu par un arrêtoir 37 ;

– six paires de conduits internes correspondant aux six ondes complètes que comporte la came 6, ménagés dans le fourreau 20 et le distributeur interne 22, et reliant les gorges 26 à 29 à la face plane 23 du distributeur interne 22 ; ce sont :

  trois conduits 38, reliés à la gorge 26, et correspondant aux premières rampes 42 de trois des six ondes ;

  trois conduits 39, reliés à la gorge 27, et correspondant aux deuxièmes rampes 43 des trois mêmes ondes ;

  trois conduits 40, reliés à la gorge 28, et correspondant aux premières rampes 44 des trois dernières ondes ; et

  trois conduits 41, reliés à la gorge 29, et correspondant aux deuxièmes rampes 45 de ces trois dernières ondes, l'ensemble des rampes 42, 43, 44 et 45 constituant la came 6 ;

– les conduits 38, 39, 40, 41 débouchant dans la face plane 23 par des orifices 46 disposés de manière à être en communication successivement avec les divers orifices 18 de la face plane 17 du bloc-cylindres ;

– la gorge 26 communique, par un conduit 47, interne à la partie 1c du carter, avec le raccord 48 d'un conduit externe 49 ;

– la gorge 27 communique, par un conduit 50, interne à la partie 1c du carter, avec le raccord 51 d'un conduit externe 52 ;

– l'enceinte 3 du carter est reliée, par un conduit 53, interne à la partie 1c du carter, avec le raccord 54 d'un conduit externe 55.

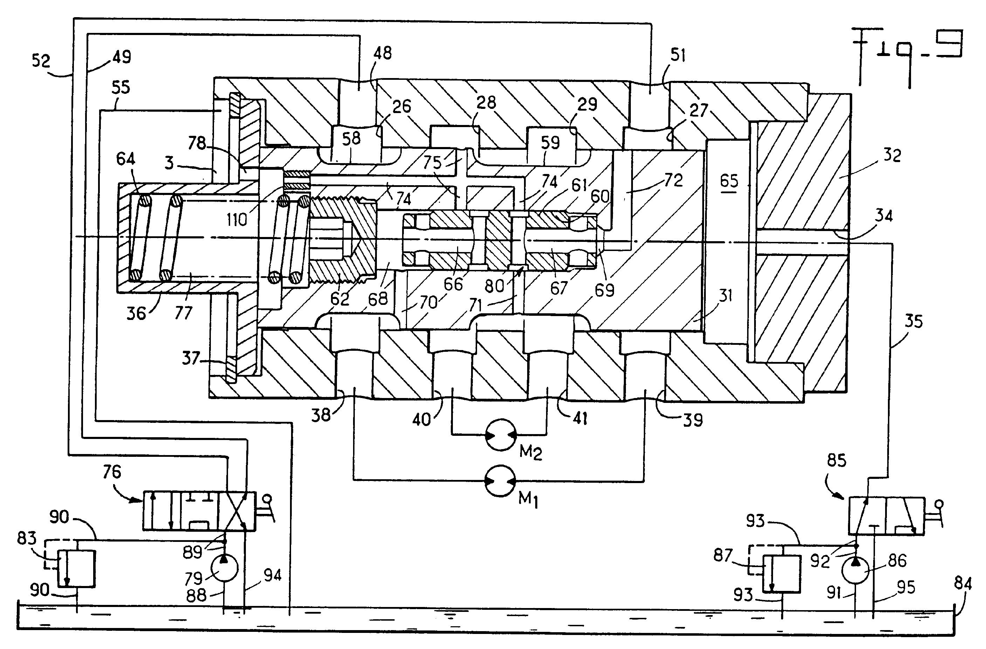

Les figures 7 à 10 représentent la partie du moteur contenant le tiroir 31 de sélection de la cylindrée à grande échelle et la schématisation du circuit d'alimentation de ce moteur en fluide sous pression.

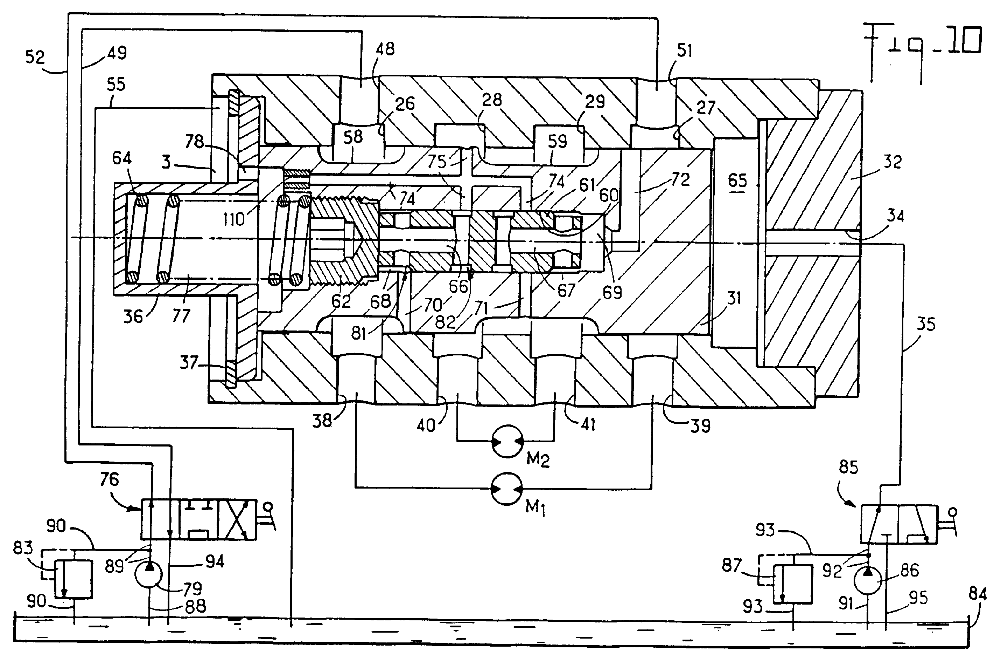

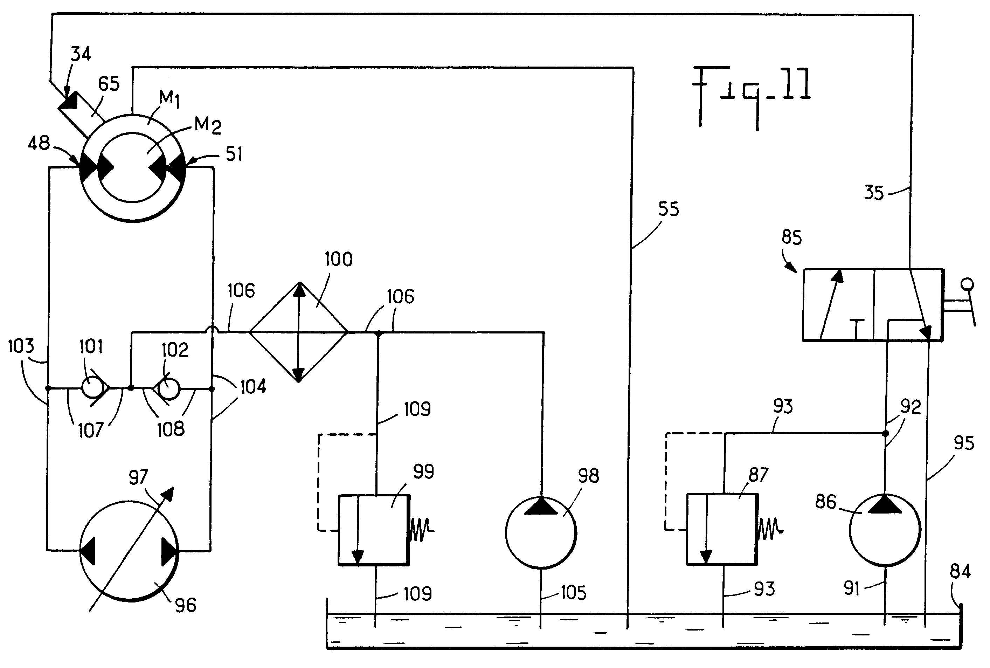

Le tiroir 31 de sélection de la cylindrée comporte deux gorges 58 et 59, qui, dans la première position de ce tiroir 31 (figures 7 et 8), mettent en communication la gorge 58, les gorges 26 et 28 de la partie 1c du carter, et, la gorge 59, les gorges 27 et 29 de la partie 1c du carter, alors que, dans la deuxième position du tiroir 31 de sélection de la cylindrée (figures 9 et 10), la gorge 58 ne communique qu'avec la gorge 26, et, la gorge 59 met en communication les gorges 28 et 29, la gorge 27 restant isolée des gorges 26, 28 et 29. Ce tiroir 31 comporte un alésage central 60, qui contient un clapet navette 61 monté coulissant à l'intérieur de cet alésage et qui est obturé par un bouchon 62 vissé dans un taraudage 63. Un ressort 64 est disposé entre le chapeau 36 et le bouchon 62 et a un effet antagoniste de celui de la pression du fluide contenu dans une chambre d'extrémité 65 délimitée par la partie 1c du carter, une extrémité du tiroir 31 de sélection de la cylindrée et le bouchon d'obturation 32. Lorsque l'effet du ressort 64 est prédominant, le tiroir 31 de sélection de la cylindrée est placé dans sa première position (figures 7 et 8) ; lorsque au contraire la pression du fluide contenu dans la chambre 65 est prédominante, le tiroir 31 de la sélection de la cylindrée est placé dans sa deuxième position (figures 9 et 10). Le clapet navette 61 comporte deux enceintes internes distinctes 66 et 67 et délimite dans l'alésage 60 deux chambres d'extrémité 68 et 69, cependant que le tiroir 31 de sélection de la cylindrée comporte les conduits suivants : un conduit 70 reliant la gorge 58 à l'alésage 60 en débouchant en permanence dans la chambre d'extrémité 68 ; un conduit 71 reliant la gorge 59 à l'alésage 60 ; un conduit 72 reliant la chambre d'extrémité 69 à la face cylindrique 73 du tiroir 31 ; un conduit 74 qui débouche dans l'alésage 60, qu'il relie, par l'intermédiaire d'une restriction calibrée 110, à une chambre 77 délimitée par l'intérieur de l'alésage 30, l'extrémité du tiroir 31 de sélection de la cylindrée qui est munie du bouchon 62 et le chapeau 36, ladite chambre 77 communiquant avec l'enceinte 3 du carter par l'intermédiaire d'orifices 78 ; et un conduit 75, qui débouche dans la face cylindrique 73 et dans l'alésage 60 et est relié au conduit 74. A l'intérieur de l'alésage 60, le clapet navette 61 peut occuper une première position extrême (figures 7 et 9) dans laquelle le volume de la chambre 68 est maximal, et une deuxième position extrême (figures 8 et 10) dans laquelle c'est au contraire le volume de la chambre 69 qui est maximal. Dans la première position extrême du clapet navette 61 (figures 7 et 9), le conduit 72 et le conduit 71, par l'intermédiaire d'une gorge 80 du clapet navette, communiquent avec l'enceinte 67 et le conduit 74, lequel conduit 74 communique également avec cette gorge 80. Dans la deuxième position du tiroir 31 de sélection de la cylindrée (figures 9 et 10), le conduit 72 débouche dans la gorge 27. Dans la deuxième position extrême du clapet navette 61 (figures 8 et 10), le conduit 70 communique avec une gorge 81 du clapet navette dans laquelle débouche l'enceinte 66. Il peut être observé que, lorsque le tiroir 31 de sélection de la cylindrée est placé dans sa deuxième position, ou bien (figure 9) le fluide contenu dans la gorge 26 et dans la chambre 68 a repoussé le clapet navette 61 vers la droite et a donc une pression supérieure à celle du fluide contenu dans la chambre 69 et dans la gorge 27, et les gorges 28 et 29 contiennent alors le fluide à la pression la plus faible (gorges 28 et 29, gorge 59, conduit 71, enceinte 67, conduit 72), ou bien (figure 10) le fluide contenu dans la gorge 27 et dans la chambre 69 a repoussé le clapet navette 61 vers la gauche et a donc une pression supérieure à celle du fluide contenu dans la chambre 68 et dans la gorge 26, et les gorges 28 et 29 contiennent alors le fluide à la pression la plus faible (gorges 26 et 58, conduit 70, enceinte 66, gorge 82 dans laquelle débouche le conduit 75, conduit 75). Dans ces deux cas, les gorges 28 et 29 contiennent le fluide à la pression la plus faible.

Dans tous les cas, l'un des conduits 74 et 75 communique avec celle des enceintes 66 et 67 contenant le fluide à la pression la plus faible.

Ainsi, dans la configuration de la figure 7, le clapet navette 61 est poussé vers la droite, la chambre 69 contenant le fluide à la pression la plus basse, le même que celui contenu dans l'enceinte 67 et dans les gorges 59, 27 et 29 : le conduit 74 communique effectivement avec l'enceinte 67.

Dans la configuration de la figure 8, le clapet navette 61 est poussé vers la gauche, la chambre 68 contenant le fluide à la pression la plus basse, le même que celui contenu dans l'enceinte 66 : le conduit 75 communique avec cette enceinte 66.

Dans la configuration de la figure 9, le clapet navette 61 est poussé vers la droite, la chambre 69 contenant le fluide à la pression la plus basse, le même que celui contenu dans l'enceinte 67 : le conduit 74 communique avec l'enceinte 67.

Enfin, dans la configuration de la figure 10, le clapet navette 61 est poussé vers la gauche, la chambre 68 contenant le fluide à la pression la plus basse, le même que celui contenu dans l'enceinte 66 : le conduit 75 communique avec cette enceinte 66.

Le fluide contenu dans le conduit 74 se déverse dans la chambre 77, à travers la restriction calibrée 110, avantageusement réalisée sous la forme d'un gicleur amovible calibré, puis se déverse dans l'enceinte 3 du carter par l'intermédiaire du ou des orifices 78.

Les pistons qui sont en appui sur les rampes 42 et 43 déplacent un volume de fluide correspondant à une première cylindrée C1, alors que ceux qui sont en appui sur les rampes 44 et 45 déplacent un volume de fluide correspondant à une cylindrée C2. Ces cylindrées C1, C2 sont schématisées sur les figures 7 à 9 sous la forme de deux moteurs M1, M2, respectivement.

Un circuit d'alimentation du moteur complet est représenté sur les figures 7 à 10 et comprend :
– un distributeur à trois positions 76 ;
– une pompe principale 79 ;
– un clapet de décharge taré 83 ;
– un réservoir de fluide 84 ;
– un distributeur à deux positions 85, de sélection de la cylindrée ;
– une pompe auxiliaire 86 ;
– un clapet de décharge taré 87.

Les conduits suivants relient les différents éléments :
– le conduit d'aspiration 88 de la pompe principale 79 relie celle-ci au réservoir 84 ;
– le conduit de refoulement 89 de la pompe principale 79 relie celle-ci au distributeur à trois positions 76 ;
– un conduit 90 relie le conduit de refoulement 89 au réservoir 84, le clapet de décharge 83 étant placé sur ce conduit 90 ;
– les conduits 49 et 52, qui sont raccordés au distributeur à trois positions 76 ;
– le conduit 55 est relié au réservoir 84 ;
– le conduit d'aspiration 91 de la pompe auxiliaire 86 relie celle-ci au réservoir 84 ;
– le conduit de refoulement 92 de la pompe auxiliaire 86 relie celle-ci au distributeur à deux positions 85 ;
– un conduit 93 relie le conduit de refoulement 92 au réservoir 84, le clapet de décharge 87 étant placé sur ce conduit 93 ;
– des conduits 94 et 95 relient les distributeurs 76 et 85, respectivement, au réservoir 84.

Les trois positions du distributeur 76 correspondent :
– la première position (figures 7 et 9), aux mises en communication des conduits 49 et 89, et, des conduits 52 et 94 ;
– la deuxième position, à l'obturation des conduits 49 et 52, et, à la mise en communication des conduits 89 et 94 ; et
– la troisième position (figures 8 et 10), aux mises en communication des conduits 52 et 89, et, des conduits 49 et 94.

Les deux positions du distributeur 85 correspondent :
– la première position (figures 7 et 8), à la mise en communication des conduits 35, 92 et 95 ; et
– la deuxième position (figures 9 et 10), à la mise en communication des conduits 35 et 92, et, à l'obturation du conduit 95.

La figure 11 représente un autre circuit d'alimentation du moteur de la figure 1, qui comporte :
– le distributeur à deux positions 85, la pompe auxiliaire 86, le clapet de décharge 87, le réservoir 84, et les conduits 35, 91, 92, 93, 95 et 55 déjà définis ;
– une pompe principale 96 à débit continûment variable (plateau inclinable 97) ;
– une pompe de gavage 98 ;
– un clapet de décharge taré 99 ;
– un échangeur de chaleur 100, faisant fonction de réfrigérant de fluide ;
– deux clapets de non-retour 101 et 102.

Les conduits suivants relient ces différents éléments :
– les conduits 103 et 104 relient les deux raccords principaux de la pompe 96 aux raccords 48 et 51 du moteur, respectivement ;
– le conduit d'aspiration 105 de la pompe de gavage 98 relie celle-ci au réservoir 84 ;
– le conduit 106 de refoulement de la pompe de gavage 98 relie celle-ci à deux conduits 107 et 108 qui sont eux-mêmes raccordés l'un à l'autre et l'un, 107, au conduit 103, l'autre, 108, au conduit 104, l'échangeur réfrigérant 100 étant placé sur le conduit de refoulement 106, le clapet de non-retour 101 étant placé sur le conduit 107 de manière à ne laisser passer le fluide que du conduit 106 vers le conduit 103, et, le clapet de non-retour 102 étant placé sur le conduit 108 de manière à ne laisser passer le fluide que du conduit 106 vers le conduit 104 ;
– un conduit 109, qui relie le conduit 106 au réservoir 84 et sur lequel le clapet de décharge 99 est placé.

Le fonctionnement du circuit représenté sur les figures 7 à 10 va maintenant être exposé.

Le distributeur à trois positions 76 ne sert qu'à inverser le sens d'alimentation du moteur, donc à commander l'inversion du sens de rotation de l'arbre de sortie 7, ou encore à maintenir le moteur à l'arrêt. Il est maintenant supposé que ce distributeur 76 est placé dans sa première position (figures 7 et 9).

Lorsque le distributeur à deux positions 85 est placé dans sa première position (figure 7), l'action du ressort 64 est prédominante et le tiroir 31 isole la gorge 28 de la gorge 29, mais met par contre en communication les gorges 26 et 28, et, les gorges 27 et 29. Les moteurs M1 et M2 sont alimentés en parallèle, la cylindrée totale du moteur complet étant égale à (C1 et C2). Une partie du fluide basse pression, contenu dans la gorge 59, est prélevée par le conduit 74, est déversée dans l'enceinte 3 et est évacuée par le conduit 55. Dans l'exemple représenté, ce fluide prélevé fait retour au réservoir 84, mais il pourrait être dirigé vers une autre destination : par exemple, traverser un échangeur de réfrigération tel que celui (100) de la figure 11, ou au contraire traverser le carter d'un autre moteur pour réchauffer ledit autre moteur. Comme le prélèvement de fluide a été réalisé sur le fluide à la plus basse des pressions, et qu'en outre la quantité prélevée ne représente qu'une partie de ce fluide à la plus basse des pressions (restriction 78), la perte d'énergie provoquée par ce prélèvement est minime.

Lorsque le distributeur à deux positions 85 est placé dans la deuxième position (figure 9), l'action de la pression du fluide contenu dans la chambre 65 est prédominante : le tiroir 31 isole chacune des gorges 26 et 27, et met en communication les gorges 28 et 29. Seul le moteur M1 est alimenté par le fluide refoulé par la pompe 79, la cylindrée de travail du moteur complet étant égale à C1. Le moteur M2 est alimenté par le fluide à la plus basse des pressions (gorge 27, conduit 72, enceinte 67, conduit 71, gorge 59) et ses pressions d'alimentation et de refoulement (gorges 28 et 29) sont égales. Une certaine quantité du fluide à la plus basse des pressions continue à être prélevée par le conduit 74 pour être traitée comme décrit ci-avant.

Le circuit de la figure 11 fonctionne comme décrit ci-après.

L'inclinaison du plateau 97 de la pompe 96 permet de refouler le fluide sous pression soit vers le conduit 103, soit vers le conduit 104, soit encore vers aucun des deux, et de régler le débit du fluide refoulé. Le distributeur à deux positions 85 permet la sélection de la cylindrée (C1 + C2, ou seulement C1) du moteur et le fluide prélevé fait retour au réservoir 84 par le conduit 55.

La pompe 96 et le moteur (M1 + M2) sont raccordés en circuit fermé (conduits 103 et 104). Si, dans un tel circuit, outre les fuites habituelles, une partie du fluide est prélevée, il est nécessaire de remplacer le fluide prélevé. La pompe de gavage 98 a précisément pour fonction de réintroduire, dans celui des conduits 103 et 104 qui contient le fluide basse pression, une quantité de fluide égale à celle qui a été prélevée.

Dans le cas du circuit de la figure 11, lorsqu'un moteur est alimenté en circuit fermé, il est connu que le fluide finit par s'échauffer. C'est la raison pour laquelle, d'une part, une certaine quantité de ce fluide est prélevée (conduit 55), et que, d'autre part, avant d'être réintroduite dans le circuit fermé (conduits 103, 104), cette quantité de fluide est réfrigérée en traversant l'échangeur de chaleur 100.

## Revendications

1. Mécanisme à fluide sous pression, moteur ou pompe, comprenant :

– deux raccords principaux (48, 51) susceptibles d'être reliés, l'un, à une enceinte contenant un fluide haute pression (89), l'autre, à une enceinte contenant un fluide basse pression (84), et inversement ;

– une came (6) à plusieurs ondes successives, qui sont réparties en un premier (42-43) et en un deuxième (44-45) groupe d'ondes distincts ;

– une pluralité de cylindres (14), qui sont ménagés dans un bloc-cylindres (11) monté à rotation (8) par rapport à ladite came (6) ;

– une pluralité de pistons (15), qui sont montés coulissants dans lesdites cylindres, au moins un piston par cylindre, et qui prennent appui (56) sur ladite came (6) ;

– un distributeur interne de fluide (22) comportant autant de paires de premiers (38-39) et de deuxièmes (40-41) conduits de distribution que d'ondes que comporte la came, lesdites paires de conduits de distribution étant réparties en deux groupes distincts de paires d'un premier (38 ; 40) et d'un deuxième (39 ; 41) conduit de distribution, chaque paire correspondant à l'une desdites ondes de la came ;

– un organe de sélection de la cylindrée (31), qui est susceptible d'être placé en deux positions distinctes, une première position, dans laquelle les premiers conduits (38, 40) de distribution des deux dits groupes de conduits de distribution sont raccordés au premier raccord principal (48) et dans laquelle les deuxièmes conduits (39, 41) de distribution des deux dits groupes sont raccordés au deuxième raccord principal (51), et, la deuxième position, dans laquelle les premiers conduits de distribution (38) du premier groupe de conduits de distribution sont raccordés au premier raccord principal (48), les deuxièmes conduits de distribution (39) du premier groupe de conduits de distribution sont raccordés au deuxième raccord principal (51), et les premiers (40) et deuxièmes (41) conduits de distribution du deuxième groupe de conduits de distribution sont raccordés entre eux (59-28-29) ;

– un clapet navette (61), qui est monté mobile dans un logement (60) ménagé dans ledit organe de sélection de la cylindrée (31), qui comporte deux faces opposées (68, 69) soumises en permanence, lorsque ledit organe de sélection de la cylindrée est placé dans ladite deuxième position (figure 9 et 10), l'une à l'effet de la pression du fluide contenu dans le premier raccord principal (48), l'autre à l'effet de la pression du fluide contenu dans le deuxième raccord principal (51), ces effets étant antagonistes et leur résultante étant susceptible de placer le clapet navette dans l'une ou l'autre de deux positions extrêmes à l'intérieur dudit logement, cependant que, lorsque l'organe de sélection de la cylindrée est placé dans sa deuxième position, ledit clapet navette établit la communication, au moyen d'au moins un conduit interne (66, 67) audit clapet navette et d'au moins un conduit (70, 71, 72, 75) interne à l'organe de sélection de la cylindrée (31) qui communique alors, d'une part, avec le conduit interne du clapet navette, d'autre part, avec celui des premier et deuxième raccords principaux susceptible de contenir le fluide basse pression (ledit clapet navette établit la communication) entre lesdits premiers (40) et deuxièmes (41) conduits de distribution dudit deuxième groupe de conduite de distribution et ledit raccord principal susceptible de contenir le fluide basse pression, caractérisé en ce qu'un conduit de prélèvement (74) est ménagé au moins partiellement dans ledit organe de sélection de la cylindrée (31) et communique avec ledit conduit interne (66 ; 67) du clapet navette, qu'il relie à une évacuation de fluide (77-55), par l'intermédiaire d'une restriction calibrée (110).

2. Mécanisme selon le revendication 1, caractérisé en ce que le clapet navette (61) comporte deux conduits intermes (66, 67), qui sont reliés, l'un (67), dans la première position du clapet navette, l'autre (66) dans la deuxième position du clapet navette, audit raccord principal (51 ; 48) susceptible de contenir le fluide basse pression, et en ce que le conduit de prélèvement comporte deux branches (74, 75) qui communiquent, l'une (74), dans la première position du clapet navette, avec l'un (67) des deux dits conduits internes du clapet navette, l'autre (75), dans la deuxième position du clapet navette, avec l'autre (66) des deux dits conduits du clapet navette.

3. Mécanisme selon l'une quelconque des revendications 1 et 2, caractérisé en ce que le conduit de prélèvement débouche dans un carter (3) que comporte le moteur.

4. Circuit fermé d'alimentation en fluide sous pression d'un mécanisme à au moins deux cylindrées selon l'une quelconque des revendications 1 à 3, caractérisé en ce qu'il comporte un réservoir de fluide (84), auquel le carter (3) dudit mécanisme est relié par un conduit d'évacuation (55), ainsi qu'une pompe de gavage (98), qui comporte un conduit d'aspiration (105) et un conduit de refoulement (106) et qui est reliée audit réservoir (84) par son conduit d'aspiration (105), un échangeur de chaleur (100), dont la fonction est de réfrigérer le fluide aspiré par ladite pompe de gavage, étant placé sur l'un (106) desdits conduits d'aspiration et de refoulement (106) de la pompe de gavage (98).

**Patentansprüche**

1. Mechanismus für mit Druck beaufschlagtes Fluid, Motor oder Pumpe, mit:
– zwei Hauptanschlußelementen (48, 51), die so beschaffen sind, daß eines mit einem ein Hochdruckfluid enthaltenden Behälter (89) und das andere mit einem ein Niederdruckfluid enthaltenden Behälter (84) und umgekehrt verbunden werden kann;
– Nockenflächen (6) mit einer Mehrzahl von aufeinanderfolgenden Wellen, die auf eine erste (42-43) und auf eine hiervon verschiedene zweite (44-45) Wellengruppe verteilt sind;
– einer Mehrzahl von Zylindern (14), die in einem in bezug auf die Nockenfläche (6) drehbar angebrachten (8) Zylinderblock (11) ausgespart sind;
– einer Mehrzahl von Kolben (15), die in den Zylindern verschiebbar angebracht sind, wobei pro Zylinder wenigstens ein Kolben vorgesehen ist, der sich auf der Nockenfläche (6) abstützt (56);
– einem internen Fluidverteiler (22), der so viele Paare von ersten (38-39) und zweiten (40-41) Verteilungsleitungen umfaßt, wie auf der Nockenfläche Wellen vorhanden sind, wobei die Paare von Verteilungsleitungen auf zwei verschiedene Gruppen eines Paares von ersten (38; 40) und zweiten (39; 41) Verteilungsleitungen aufgeteilt sind, wobei jedes Paar einer der Wellen der Nockenfläche entspricht;
– einem Zylinderauswahlelement (31), das so beschaffen ist, daß es in zwei verschiedenen Positionen angeordnet werden kann, einer ersten Position, in der die ersten Verteilungsleitungen (38, 40) der zwei erwähnten Gruppen von Verteilungsleitungen mit dem ersten Hauptanschlußelement (48) verbunden sind und in der die zweiten Verteilungsleitungen (39, 41) der zwei erwähnten Gruppen mit dem zweiten Hauptanschlußelement (51) verbunden sind, und einer zweiten Position, in der die ersten Verteilungsleitungen (38) der ersten Gruppe von Verteilungsleitungen mit dem ersten Hauptanschlußelement (48) und die zweiten Verteilungsleitungen (39) der ersten Gruppe von Verteilungsleitungen mit dem zweiten Hauptanschlußelement (51) verbunden sind und die ersten (40) und zweiten (41) Verteilungsleitungen der zweiten Gruppe von Verteilungsleitungen untereinander (59-28-29) verbunden sind;
– einem Pendelventil (61), das in einem im Zylinderauswahlelement (31) ausgesparten Aufnahmesitz (60) beweglich angebracht ist und zwei gegenüberliegende Stirnseiten (68, 69) aufweist, von denen die eine ständig der Wirkung des Drucks des im ersten Hauptanschlußelement (48) enthaltenen Fluids und die zweite ständig der Wirkung des Drucks des im zweiten Hauptanschlußelement (51) enthaltenen Fluids ausgesetzt ist, wenn sich das Zylinderauswahlelement in der zweiten Position (Fig. 9 und 10) befindet, wobei diese Wirkungen einander entgegengesetzt sind und ihre Resultierende dazu geeignet ist, das Pendelventil im Inneren seines Aufnahmesitzes in die eine oder in die andere seiner zwei Extrempositionen zu verschieben, während in dem Fall, in dem sich das Zylinderauswahlelement in seiner ersten Position befindet, das Pendelventil über wenigstens eine interne Leitung (66, 67) des Pendelventils und über wenigstens eine interne Leitung (70, 71, 72, 75) des Zylinderauswahlelements (31), die daher einerseits mit der internen Leitung des Pendelventils und andererseits mit demjenigen der ersten und zweiten Hauptanschlußelemente, das das Niederdruckfluid enthalten kann, eine Verbindung herstellt, zwischen den ersten (40) und den zweiten (41) Verteilungsleitungen der zweiten Gruppe von Verteilungsleitungen und dem Hauptanschlußelement, das das Niederdruckfluid enthalten kann, eine Verbindung herstellt, dadurch gekennzeichnet, daß in dem Zylinderauswahlelement (31) wenigstens teilweise eine Abgriffleitung (74) ausgespart ist, die mit der internen Leitung (66; 67) des Pendelventils in Verbindung steht und die dieses Pendelventil über eine dazwischengeschaltete kalibrierte Begrenzungseinrichtung (110) mit einem Fluidauslaß (77-75) verbindet.

2. Mechanismus gemäß Anspruch 1, dadurch gekennzeichnet, daß das Pendelventil (61) zwei interne Leitungen (66, 67) umfaßt, von denen eine (67) in der ersten Position des Pendelventils und die andere (66) in der zweiten Position des Pendelventils mit demjenigen Hauptanschlußelement (51; 48) verbunden ist, das das Niederdruckfluid enthalten kann, und daß die Abgriffleitung zwei Zweige (74, 75) umfaßt, von denen einer (74) in der ersten Position des Pendelventils mit einer (67) der zwei erwähnten internen Leitungen des Pendelventils und der andere (75) in der zweiten Position des Pendelventils mit der anderen (66) der zwei erwähnten Leitungen des Pendelventils verbunden ist.

3. Mechanismus gemäß einem der Ansprüche 1 und 2, dadurch gekennzeichnet, daß die Abgriffleitung in ein Gehäuse (3) mündet, das den Motor enthält.

4. Geschlossener Kreis für die Versorgung eines Mechanismus mit wenigstens zwei Zylindern gemäß einem der Ansprüche 1 bis 3 mit einem mit Druck beaufschlagten Fluid, dadurch gekennzeichnet, daß er versehen ist mit einem Fluidreservoir (84), mit dem das Gehäuse (3) des Mechanismus über eine Auslaßleitung (55) verbunden ist, sowie mit einer Zusatzpumpe (98), die eine Ansaugleitung (105) und eine Förderleitung (106) aufweist und die über ihre Ansaugleitung (105) mit dem Reservoir (84) verbunden ist, wobei in einer (106) der Ansaug- und Förderleitungen (106) der Hilfspumpe (98) ein Wärmetauscher (100) angeordnet ist, dessen Funktion die Kühlung des von der Hilfspumpe angesaugten Fluids umfaßt.

## Claims

1. Pressurized fluid mechanism, motor or pump, comprising:

– two principal connections (48, 51) capable of being connected, one to an enclosure containing a high-pressure fluid (89), the other to an enclosure containing a low-pressure fluid (84), and vice versa;

– a cam 6 with a plurality of successive curves which are distributed in a first (42-43) and a second (44-45) distinct group of curves;

– a plurality of cylinders (14), which are arranged in a cylinder block (11) mounted to rotate (8) with respect to said cam (6);

– a plurality of pistons (15) which are mounted to slide in said cylinders, at least one piston per cylinder, and which abut (56) on said cam (6);

– an inner fluid distributor (22) comprising as many pairs of first (38-39) and second (40-41) distribution conduits as there are curves on the cam, said pairs of distribution conduits being distributed in two distinct groups of pairs of a first (38 ; 40) and a second (39 ; 41) distribution conduit, each pair corresponding to one of said curves of the cam;

– a member for selecting the cubic capacity (31), which is capable of being placed in two distinct positions, a first position in which the first distribution conduits (38, 40) of said two groups of distribution conduits are connected to the first principal connection (48) and in which the second distribution conduits (39, 41) of said two groups are connected to the second principal connection (51), and the second position, in which the first distribution conduits (38) of the first group of distribution conduits are connected to the first principal connection (48), the second distribution conduits (39) of the first group of distribution conduits are connected to the second principal connection (51) and the first (40) and second (41) distribution conduits of the second group of distribution conduits are connected together (59-28-29);

– a shuttle valve (61) which is mounted to move in a housing (60) made in said member for selecting the cubic capacity (31) which comprises two opposite faces (68,69) permanently subjected, when said cubic capacity selection member is placed in said second position (figures 9 and 10), one to the effect of the pressure of the fluid contained in the first principal connection (48), the other to the effect of the pressure of the fluid contained in the second principal connection (51), these effects being antagonistic and their resultant being capable of placing the shuttle valve in one or the other of two extreme positions inside said housing, whilst, when the cubic capacity selection member is placed in its second position, said shuttle valve establishes communication, by means of at least one conduit (66, 67) inside said shuttle valve and at least one conduit (70, 71, 72, 75) inside the cubic capacity (31) selection member which then communicates on the one hand with the inner conduit of the shuttle valve, on the other hand with that of the first and second principal connections capable of containing the low-pressure fluid, (said shuttle valve establishes communication) between said first (40) and second (41) distribution conduits of said second group of distribution conduits and said principal connection capable of containing the low-pressure fluid, characterised in that a bleeding conduit (74) is arranged at least partially in said cubic capacity selection member (31) and communicates with said inner conduit (66 ; 67) of the shuttle valve, which it connects to a fluid evacuation (77-55) via a calibrated restriction (110).

2. Mechanism according to claim 1, characterized in that the shuttle valve (61) comprises two inner conduits (66, 67) which are connected, one (67), in the first position of the shuttle valve, the other (66), in the second position of the shuttle valve, to said principal connection (51 ; 48) capable of containing the low-pressure fluid, and
in that the bleeding conduit comprises two branches (74, 75) which communicate, one (74), in the first position of the shuttle valve, with one (67) of the said two inner conduits of the shuttle valve, the other (75), in the second position of the shuttle valve, with the other (66) of said two inner conduits of the shuttle valve.

3. Mechanism according to any one of claims 1 and 2, characterized in that the bleeding conduit opens out into a housing (3) that the motor comprises.

4. Closed circuit for pressurized fluid supply of a mechanism having at least two cubic capacities according to any one of claims 1 to 3, characterized in that it comprises a reservoir of fluid (84), to which the housing (3) of said mechanism is connected by an evacuation conduit (55), as well as a booster pump (98), which comprises a suction conduit (105) and a delivery conduit (106) and which is connected to said reservoir (84) by its suction conduit (105), a heat exchanger (100) whose function is to refrigerate the fluid sucked by said booster pump, being placed on one (106) of said suction and delivery (106) conduits of the booster pump (98).

Fig.1

Fig.2

Fig.3

Fig.4

47

30

20

26

38 39 40

41 13 41

40 38

39 39

38 40 39

41

1c

20 27

39

39 13

39 39

1c

50

12

EP 0 365 420 B1

Fig-5

Fig-6

EP 0 365 420 B1

Fig-7

Fig. 8

Fig. 9

Fig-10

EP 0 365 420 B1

Fig-11